# EUROPEAN PATENT SPECIFICATION

(11) **EP 3 289 435 B1**
(45) Date of publication and mention of the grant of the patent: **20.11.2019**
(21) Application number: 16786765.4
(22) Date of filing: 28.04.2016
(51) Int. Cl.: G06F 3/01, G06F 1/16, G06F 3/0346, G06F 3/038, H04M 1/725

(54) **USER INTERFACE CONTROL USING IMPACT GESTURES**
BENUTZERSCHNITTSTELLENSTEUERUNG MITTELS SCHLAGGESTEN
COMMANDE D'INTERFACE UTILISATEUR UTILISANT DES GESTES D'IMPACT

(30) Priority: 29.04.2015 US 201562154352 P; 26.04.2016 US 201615138393
(43) Date of publication of application: 07.03.2018
(73) Proprietor: Samsung Electronics Co., Ltd., Gyeonggi-do 16677 (KR)
(72) Inventor: THADANI, Sumeet, Mountain View, California 94043 (US); JAY, David, Mountain View, California 94043 (US); SAPIR, Marina, Mountain View, California 94043 (US)
(74) Representative: HGF Limited
(86) International application number: PCT/KR2016/004464
(87) International publication number: WO 2016/175579

(56) References cited:
- WO-A1-2014/130871
- US-A1- 2003 156 756
- US-A1- 2011 018 731
- US-A1- 2013 002 538
- US-A1- 2013 234 924
- US-A1- 2014 152 537
- US-A1- 2014 176 422
- US-A1- 2014 267 024
- US-A1- 2015 019 153

## Description

### Technical Field

The present disclosure relates in general to the field of media control in processor type devices using impact gestures, and specifically, to methods and systems for a processor to control a user-interface of a wearable computer or a device connected to the wearable computer using the impact gestures.

### Background Art

Optical imaging methods and systems are applicable in media control applications, allowing a user to control media by tracking the user's gestures. In an example of current systems in use, Microsoft Kinect® uses optical imaging or sensing to control games and the user interface associated with the games.

These systems are, however, based on sensing a subject's gestures that are remote from the subject. Most optical control systems offer no physical contact between the optical sensing system and the subject. It is also commonly recognized that a certain distance is required between the subject and the optical sensing system to maintain operational stability and repeatability when interpreting a user's actions.

In another example of existing systems, some smart phones are configured to detect their orientation in space and to perform an action related to any change in its orientation. This spatial awareness allows a user to reject a phone call by simply turning the phone over. Smartphone provider, Samsung®, has demonstrated such capabilities with its TouchWiz® interface in its Samsung Galaxy® phones. This functionality, however, is more a function of the smartphone's awareness of its orientation, than analyzing the user's gesture performed on the device that forces the device to perform an internal function.

Another example of a device or interface with gesture-detection capability that is a function of its own spatial awareness is the Wii® gaming system by Nintendo®. The Wii® is not essentially a monitoring system, but is configured to perform software actions in accordance with received triggers to its sensors. Such triggers are pre-defined movements applied to the hand-held Wii® console that pertain to a specific task (e.g., turning a steering wheel in an auto racing game). In accordance with the applied movement, corresponding software actions that reflect the movement are displayed via a monitor. The problem with these systems are that none of these systems monitor for human impact gestures, but instead monitor the device or gaming system for gross motor movements. Moreover the existing systems are not suited for impact gestures and corresponding control of the user interface using such gestures. Microsoft Kinect®, Nintendo Wii®, and Samsung's phone's gesture recognition process are examples of current systems that do not fully support a user interface control using impact gestures.

US-2013/234924-A1 discloses a portable electronic device which includes a motion sensor and controller. The motion sensor detects an alternating signature motion of a limb of a user about a virtual axis corresponding to the limb. The motion sensor may be an accelerometer capable of detecting three dimensional acceleration. The accelerometer detects acceleration along X, Y and/or Z axes, in which acceleration peaks of the X and Z axes alternate with each other and acceleration of the Y axis remains substantially steady relative to the X and Y axes. The portable electronic device controls at least one function based on the detected alternating signature motion of the limb and/or acceleration along the X, Y and/or Z axes.

US-2014/176422-A1 discloses a biometric monitoring device with a display. The display may, in response to receiving page advance requests from a user, advance through a plurality of different data display pages, at least some of which show aspects of biometric data recorded by the device. The biometric monitoring device may also, based on the biometric data, modify the sequential display order of the data display pages. In some implementations, a biometric monitoring device integrated into a wristband may be configured to turn a display of the biometric monitoring device on and display the time in response to biometric sensors of the biometric monitoring device detecting motion of the wearer's forearm consistent with moving the forearm into a watch-viewing position.

US-2014/267024-A1 discloses computing interface systems and methods. Some implementations include a first accelerometer attached to a first fastening article that is capable of holding the first accelerometer in place on a portion of a thumb of a user. Some implementations may also include a second accelerometer attached to a second fastening article that is capable of holding the second accelerometer in place on a portion of a wrist of a user. Some implementations may additionally or alternatively include magnetometers and/or gyroscopes attached to the first and second fastening articles. Some implementations may also include a processing device configured to receive measurements from the accelerometers, magnetometers, and/or gyroscopes and identify, based on the measurements, symbols associated with motions of a user's hand and/or the orientation of the hand. Some implementations may allow a user to control a cursor in a three dimensional virtual space and interact with objects in that space.

US-2015/019153-A1 discloses a method including receiving real-time sensor data from N sensors on a computing device. The real-time sensor data corresponds to a transition in a physical state of the computing device caused by a user of the computing device. The method also includes applying a linear function to the real-time sensor data from each of the N sensors; determining a vector based on an N-tuple comprising the derivatives; comparing the vector with a pre-determined hyperplane with N-1 dimensions; and determining based on the comparison whether the transition is an event corresponding to any of one or more pre-determined imminent uses of the computing device by the user or a non-event not corresponding to any of the pre-determined imminent uses of the computing device by the user.

### Disclosure of Invention

### Solution to Problem

The scope of the invention is defined by the appended claims. In one aspect, a method for a processor to control a user-interface of a wearable computer or a device connected to the wearable computer includes: receiving, from one or more sensors, sets of values describing three-dimensional motion at periodic time points that are taken together to form a measurement time interval; calculating, by the processor, a meta acceleration value for each of the periodic time points received during the measurement time interval; determining, by the processor, two distinct quiescent time intervals based on the calculated meta acceleration values; determining, by the processor, a gesture time interval between the two distinct quiescent time intervals; calculating, by the processor, sets of statistical values corresponding to each of the sets of values within the gesture time interval; classifying, by the processor, the sets of statistical values thereby identifying a corresponding impact gesture of the wrist or fingers of a user wearing the wearable computer; and initiating, by the processor, a predefined response on the user interface of the wearable computer or the device connected to the wearable computer; wherein the predefined response corresponds to the identified impact gesture; wherein the gesture time interval is period between distinct quiescent time intervals in time the measurement time interval; wherein the distinct quiescent time intervals have a set of contiguous time points with absolute maximum values less than a predefined threshold value; and wherein the sets of statistical values are calculated for time points between the distinct quiescent time intervals.

In another aspect, a system comprising a processor to control a user-interface of a wearable computer or a device connected to the wearable computer; and one or more sensors for receiving sets of values describing three-dimensional motion at periodic time points that are taken together to form a measurement time interval; wherein the processor is configured to: calculate, by the processor, a meta acceleration value for each of the periodic time points received during the measurement time interval; determine, by the processor, two distinct quiescent time intervals based on the calculated meta acceleration values; determine, by the processor, a gesture time interval between the two distinct quiescent time intervals; calculating sets of statistical corresponding to each of the sets of values within the gesture time interval; classify the sets of statistical values thereby identifying a corresponding impact gesture of the wrist or fingers or a user wearing the wearable computer; and initiate a predefined response on the user interface of the wearable computer or the device connected to the wearable computer; wherein the processor is configured to define the gesture time interval as a period between distinct quiescent time intervals in the measurement time interval; wherein the distinct quiescent time intervals have a set of contiguous time points with absolute maximum values less than a predefined threshold value; and wherein the sets of statistical values are calculated for time points between the distinct quiescent time intervals.

### Advantageous Effects

The embodiments presented herein are methods and systems to resolve the problems identified above, where existing systems merely monitor devices or gaming systems for gross motor movements and are not suited for impact gestures and corresponding control of the user interface using such gestures.

### Brief Description of Drawings

The accompanying figures, which are included as part of the present specification, illustrate the various implementations of the presently disclosed system and method. Together with the general description given above and the detailed description of the implementations given below, the figures serve to explain and teach the principles of the present system and method.
Figure 1 illustrates a system with a processor to control a user-interface of a wearable computer or a device connected to the wearable computer in accordance with an aspect of the invention.
Figure 2 illustrates a system with a processor in a wearable computer or a device connected to the wearable computer in accordance with an aspect of the invention.
Figure 3 illustrates a method for a processor to control a user-interface of a wearable computer or a device connected to the wearable computer in accordance with an aspect of the invention.
Figure 4 illustrates periodic time points that are applicable to control a user-interface of a wearable computer or a device connected to the wearable computer in accordance with an aspect of the invention.
Figure 5 illustrates a method for a processor to control a user-interface of a wearable computer or a device connected to the wearable computer in accordance with an aspect of the invention.
Figures 6A and 6B illustrate classification of sets of statistical features that are applicable to control a user-interface of a wearable computer or a device connected to the wearable computer in accordance with an aspect of the invention.

### Best Mode for Carrying out the Invention

The scope of the invention is defined by the appended claims. In one aspect, the invention provides methods and systems for a processor to control a user-interface of a wearable computer or a device connected to the wearable computer. The present method and system monitors events received from sensors on the wearable computer or the device connected to the wearable computer offer a method for control of media. A machine learning process is applicable to analyze the monitored events and to determine when the monitored event is a predefined impact gesture. On determination that the monitored event is a predefined impact gesture, the processor is configured to perform a predefined response in the user-interface corresponding to the predefined impact gesture.

In one aspect, a method for a processor to control a user-interface of a wearable computer or a device connected to the wearable computer is disclosed. The method includes receiving at periodic time points, from one or more sensors, a set of three-dimensional values characterizing linear acceleration, tilt, and rotational velocity of the wearable computer in real-time. The periodic time points taken together constitute a measurement time interval. The processor is configured to calculate a meta acceleration value for each of the periodic time points during the measurement time interval. The meta acceleration value is based on the set of three-dimensional values. A determination is made by the processor for two distinct quiescent time intervals. The two distinct quiescent time intervals correspond to two distinct subsets of contiguous periodic time points during the measurement time interval. Further, the determination is made so that the meta acceleration value at each time point in the two distinct subsets is less than a predefined threshold value. A second determination is made as define a gesture time interval between the two distinct quiescent time intervals. The gesture time interval is defined by the periodic time points that occur between the two subsets of contiguous periodic time points corresponding to the two distinct quiescent time intervals. The processor calculates sets of statistical features corresponding to the gesture time interval. The sets of statistical features are based on the sets of three-dimensional values at each of the periodic time points that constitute the gesture time interval. A classifying function, by the processor, classifies each of the sets of statistical features in at least two dimensions using at least one discriminant function, thereby identifying at least two corresponding classifications to partially or fully segregate the sets of statistical features. At least one of the classifications corresponds to a predefined impact gesture. The classification of each of the sets of statistical features as a predefined impact gesture causes the processor to initiate a predefined response on the user interface of the wearable computer or the device connected to the wearable computer. Consequently, the predefined response corresponds to the predefined impact gesture.

In another aspect of the present invention, a method for a processor to control a user-interface of a wearable computer or a device connected to the wearable computer is disclosed. The method includes receiving, from one or more sensors comprising an accelerometer and an orientation sensor, sets of three-dimensional values comprising acceleration, tilt, and rotational velocity. Each set of three-dimensional values corresponds to one of a plurality of time points recorded in real-time. A buffer or memory is available for storing the sets of three-dimensional values. The processor is configured for calculating a meta acceleration value for each of the sets of three-dimensional values. Thereafter a determination function of the processor determines at least two time points of the plurality of time points at which the corresponding calculated meta acceleration values are less than a predefined percentage of the maximum meta acceleration value from the sets of three-dimensional values. A second determination function by the processor is performed to determine the sets of three-dimensional values between the at least two time points received by the accelerometer and the orientation sensor with a predefined event length. The processor then calculates sets of statistical features, where each set of statistical features corresponds to each of those sets of three-dimensional values that are determined to be within the predefined event length. The processor then classifies each of the sets of statistical features in at least two dimensions using at least one discriminant function, thereby identifying at least two corresponding classifications to partially or fully segregate the sets of statistical features. The at least one of the two classifications corresponds to a predefined impact gesture and the classification of the sets of statistical features causes the processor to initiate a predefined response on the user interface of the wearable computer or the device connected to the wearable computer. Consequently, the predefined response corresponds to the predefined impact gesture.

In one aspect, a method for a processor to control a user-interface of a wearable computer or a device connected to the wearable computer includes: receiving, from one or more sensors, sets of values describing three-dimensional motion; averaging, by the processor, absolute maximum values of the sets of values to define a time period; calculating, by the processor, sets of statistical values corresponding to each of the sets of values within the time period; classifying, by the processor, the sets of statistical values thereby identifying a corresponding impact gesture; and initiating, by the processor, a predefined response on the user interface of the wearable computer or the device connected to the wearable computer, wherein the predefined response corresponds to the impact gesture.

The sets of values may describe linear acceleration, tilt, and rotational velocity of the wearable computer in real-time.

The receiving step, from one or more sensors, may receive the sets of values at periodic time points that are taken together to form a time interval.

The time period may be a period between distinct quiescent time intervals in the time interval, and the distinct quiescent time intervals may have a set of contiguous time points with absolute maximum values less than a predefined threshold value.

The sets of statistical values may be calculated for time points between the distinct quiescent time intervals.

The distinct quiescent time intervals may be 150 milliseconds apart from each other.

The classifying step may be performed in at least two dimensions using at least one discriminant function.

The sets of statistical values may be calculated by: normalizing each of the sets of values that are within: a predetermined number of time points in front and behind each time point sought to be normalized; and calculating local maxima and local minima for the sets of values that are within the time period.

The sets of statistical values may be calculated by: normalizing each of the sets of values that are within a predefined length of time points, the normalized three-dimensional values may be capped at a predefined normalization threshold; and calculating local maxima and local minima for the three-dimensional values that are within the time period and optionally within a predefined normalization threshold.

The sets of statistical values may be calculated by: normalizing each of the sets of values that are within the time period by: dividing each of the sets of values with the average of neighboring values of the same type and dimension, and that are a predefined number of time points neighboring either sides of an event corresponding to the impact gesture; and calculating local maxima and local minima for the sets of values that are within the time period.

The impact gesture may include finger snaps, tapping, and finger flicks.

In one aspect, a system includes: a processor to control a user-interface of a wearable computer or a device connected to the wearable computer; one or more sensors for receiving sets of values describing three-dimensional motion; the processor for averaging absolute maximum values of the sets of values to define a time period; the processor for calculating sets of statistical values corresponding to each of the sets of values within the time period; the processor for classifying the sets of statistical values thereby identifying a corresponding impact gesture; and the processor for initiating a predefined response on the user interface of the wearable computer or the device connected to the wearable computer, wherein the predefined response corresponds to the impact gesture.

The sets of values may describe linear acceleration, tilt, and rotational velocity of the wearable computer in real-time.

The processor for receiving the sets of values may be configured to receive the sets of values at periodic time points that are taken together to form a time interval.

The processor may be configured to define the time period as a period between distinct quiescent time intervals in the time interval, and the distinct quiescent time intervals may have a set of contiguous time points with absolute maximum values less than a predefined threshold value.

The sets of statistical values may be calculated for time points between the distinct quiescent time intervals.

The distinct quiescent time intervals may be 150 milliseconds apart from each other.

The processor for classifying may be configured to classify in at least two dimensions using at least one discriminant function.

The processor may be configured to calculate the sets of statistical values by: normalizing each of the sets of values that are within: a predetermined number of time points in front and behind each time point sought to be normalized; and calculating local maxima and local minima for the sets of values that are within the time period.

The processor may be configured to calculate the sets of statistical values by: normalizing each of the sets of values that are within a predefined length of time points, the normalized three-dimensional values may be capped at a predefined normalization threshold; and calculating local maxima and local minima for the three-dimensional values that are within the time period and optionally within a predefined normalization threshold.

The processor may be configured to calculate the sets of statistical values by: normalizing each of the sets of values that are within the time period by: dividing each of the sets of values with the average of neighboring values of the same type and dimension, and that are a predefined number of time points neighboring either sides of an event corresponding to the impact gesture; and calculating local maxima and local minima for the sets of values that are within the time period.

The impact gesture may include finger snaps, tapping, and finger flicks.

### Mode for the Invention

This application claims the benefit of priority to U.S. Provisional Application number 62/154,352, filed on April 29, 2015.

The embodiments presented herein are methods and systems to resolve the problems identified above, where existing systems merely monitor devices or gaming systems for gross motor movements and are not suited for impact gestures and corresponding control of the user interface using such gestures.

An embodiment of the invention herein detects impact gestures of the wrist and fingers by applying machine learning techniques to data from wrist-mounted accelerometers and gyroscopes. These impact gestures can be used to control smart devices mounted on the wrist or other connected devices. Specifically, an embodiment of the invention pertains to processor-implemented systems and methods for controlling user interface on a wearable computer, or a device connected to the wearable computer, by impact gesture. Impact gestures are typically not an action performed on the wearable computer, as is the case, for example, for the Wii® controller, but is instead an independent action that is monitored by the wearable computer, which then determines that the action is pertinent to control a feature of the wearable computer. In an example, the wearable computer may be connected to a secondary device (e.g., a separate computer, a display, or a gaming controller), where any detected and classified impact gestures on the wearable computer may be transferred to control a user interface on the secondary device.

Certain existing technologies use accelerometers and gyroscopes to capture big movements of the arm and hands to find predetermined hand gestures. The system herein captures "impact gestures," for example, when a user flicks their fingers or snap their fingers. These are finer gestures that require a much higher level of accuracy in detection. While existing detection methods monitor and detect gross motor actions, the system herein focusses on detecting fine motor actions.

The method/system may include one or more gesture sensors - e.g., an accelerometer and an orientation sensor, a buffer memory component, a gyroscope, and a processor capable of complex signal processing. The method or system is typically implemented on a wearable computer, which is in physical contact with a hand or wrist of a human subject. Alternatively, the wearable computer is merely "wearable" if it is in physical contact with the human subject, and not fixed to the human subject. Accordingly, in certain exemplary implementations, a hand-held device may qualify as a wearable computer. Furthermore, the one or more gesture sensors monitor the fingers and hands for impact gestures in real-time. In certain implementations, the invention contemplates using gyroscopes as the one or more gesture sensors that monitors the fingers.

The buffer component receives electronic signals corresponding to the monitored human impact gestures from the one or more gesture sensors. While the buffer is a temporary memory with limited capacity, a person of ordinary skill may consider a general volatile or non-volatile memory in its place. The electronic signals typically correspond to either binary data or analog data that may be to converted to binary data for analysis of an applicable human gesture. The signal processor is coupled to the buffer component and performs the signal processing aspects of this disclosure. Particularly, the signal processor is at least configured to extract differential features of the electronic signals. The signal processor is also configured to perform pattern recognition of the extracted differential features as disclosed below.

In one aspect, the pattern recognition includes comparing the extracted differential features to predefined differential features. The predefined differential features correspond to human gestures associated with impact gestures, non-limiting examples of which include finger snapping, finger flicking, and tapping. Furthermore, the invention contemplates, in one implementation, that the processor is configured to perform pattern recognition using neural networks, support vector machines, and/or other classification tools. The predefined differential features are determined using a discriminant analysis approach to identify specific features that are significant from features otherwise corresponding to general gestures or hand motions. A further aspect of this invention contemplates configuring the processor with a filtering algorithm to detect and filter noise corresponding to general gestures and hand motions, which are otherwise not intended as the impact gestures. For example, as explained in further detail below, thresholds are applied to cause the processor to ignore events that extend for a time period between 300 to 400 milliseconds or beyond 500 milliseconds. Furthermore, threshold limits are in place to cause the processor to recognize, as events, only those sensor component outputs that falls within two quiescent time intervals.

The pattern recognition process includes identifying at least one predefined differential feature corresponding to the extracted differential features. The predefined differential feature is identified as a feature that separates an gesture movement intended for control of the wearable computer or device connected to the wearable computer from random and casual movements, and is determined prior to the pattern recognition process by a discriminant analysis function that is capable of differentiating between the two. The signal processor is also configured for identifying predefined processor-implemented control functions corresponding to the predefined differential feature identified in the pattern recognition process. The signal processor may then execute at least one of the predefined processor-implemented control functions for the wearable computer, thereby controlling the wearable computer via the impact gestures.

The disclosure herein contemplates configuring the processor to perform pattern recognition and smart selection using neural networks, support vector machines, and/or other classification tools. The wearable computer can include smart-watches, electronic bracelets, and smart-rings. Still further, the control features offered to the wearable computer includes control of the user interface of the wearable computer 105/200 or a device 240 connected to the wearable computer 200.

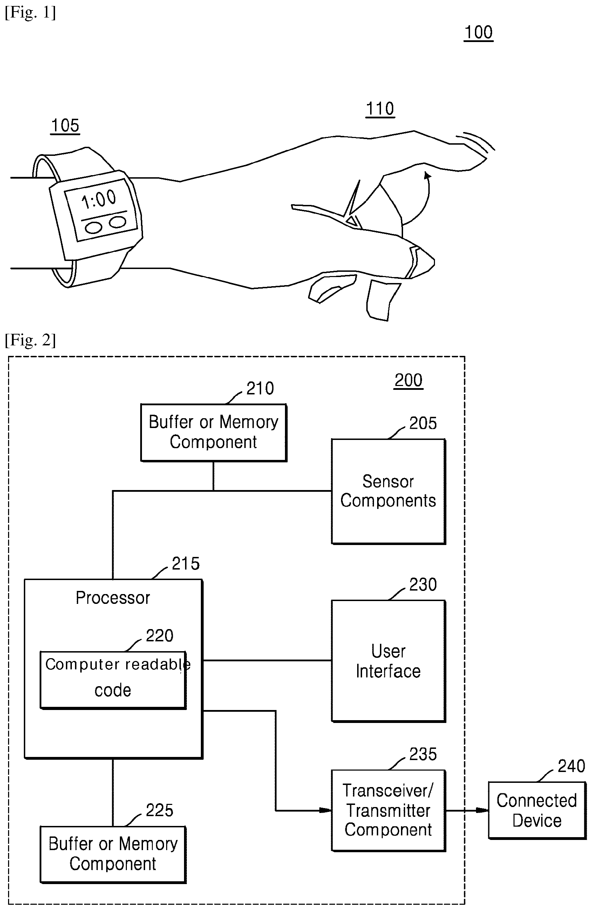

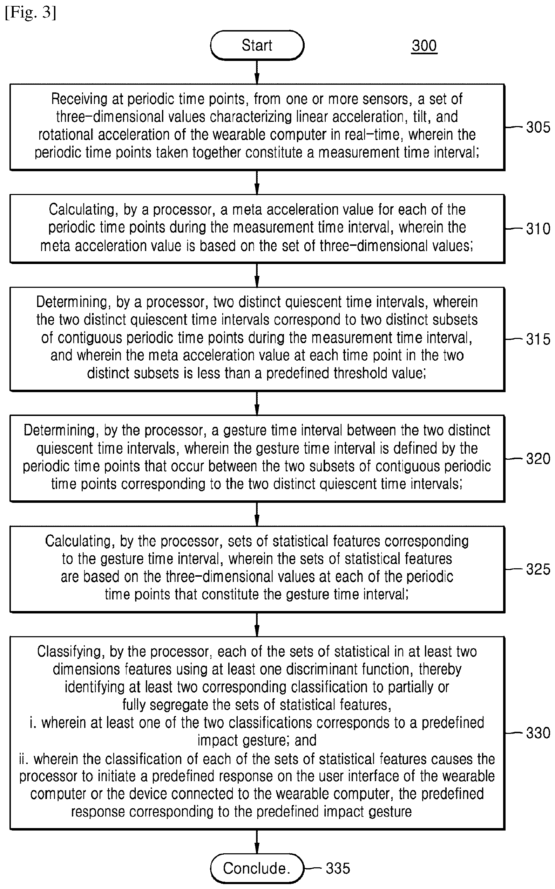

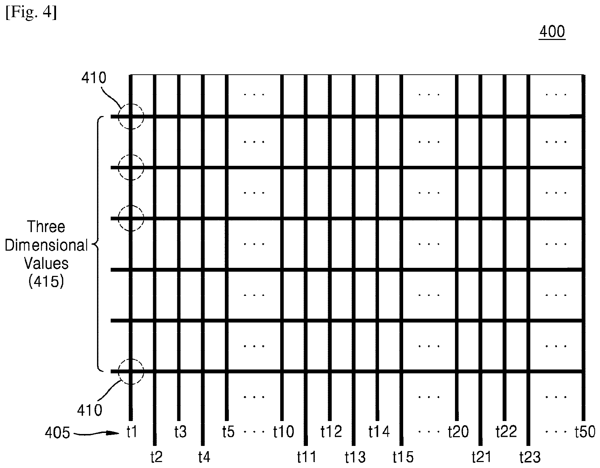

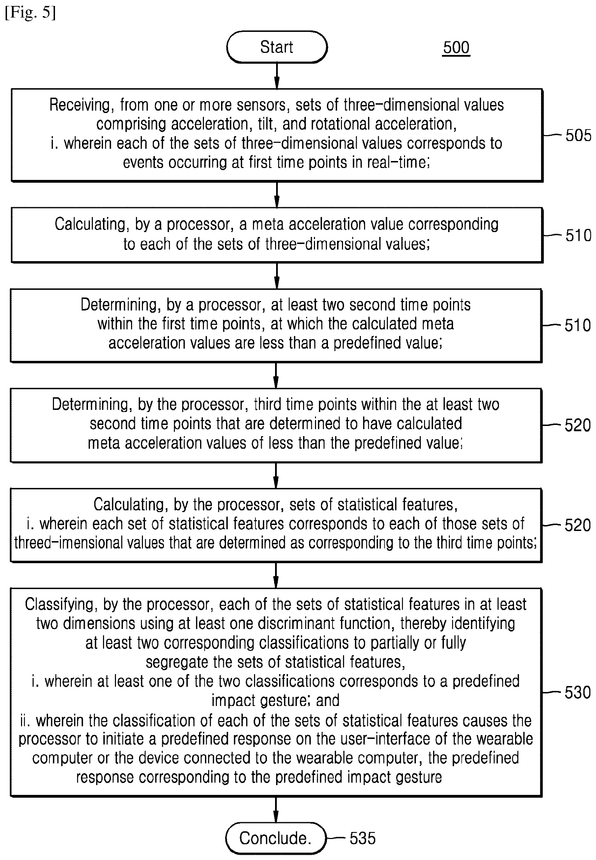

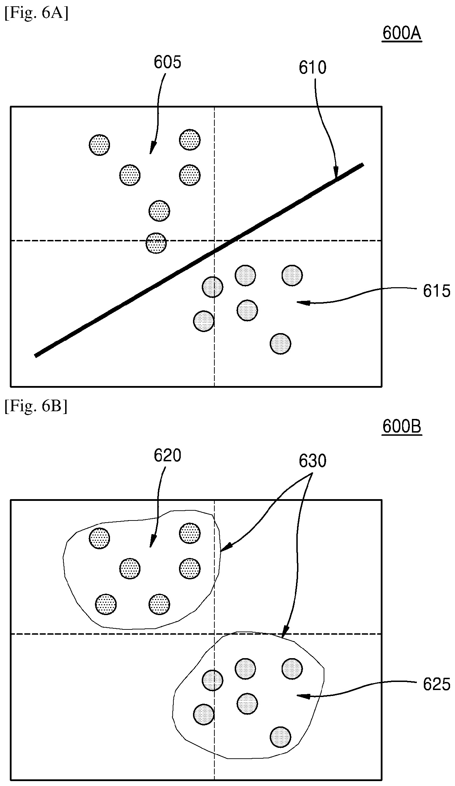

Figs. 1-5 and 6A-B illustrate exemplary aspects of the present invention. Fig. 1 illustrates a wrist watch that is an exemplary system embodying aspects of this disclosure. The wrist watch 105 includes sensors to monitor impact gestures effected by the fingers of hand 110. Fig. 2 illustrates the block components 200 of the present invention. Figs. 3 and 5 illustrate methods 300 and 500 of present invention. Fig. 4 illustrates an exemplary time period 400 during which the system and method of the present invention captures and analyzes data for determining impact gestures. Figs. 6A-B illustrate exemplary classifications available to partially or fully segregate the sets of statistical features.

Figs. 2 and 3 illustrate an exemplary system 200 and an exemplary method 300 of the present invention. The exemplary system includes functions that are performed by configuring processor 215 via computer-readable code 220. In an exemplary aspect, the computer-readable code 220 represents firmware of the processor or software code that is stored in memory component 210 or 225, and that is made available for configuring the processor 215 during operation. Memory components 210 and 225 are well known components, including DRAM, flash, or any other suitable volatile or non-volatile memory. The calculation step 310 generates a meta acceleration value corresponding to each of the sets. In this context, "meta acceleration" for an intended time point refers to the mean of the absolute maximum values among all the axes for linear acceleration, tilt, and rotational velocity that are collected for a predefined number of time points, and that includes the intended time point. For example, when the predefined number of time points is 5 time points, the time points include two time points ahead and two behind the intended time point, and the intended time point. Further, the absolute maximum refers to a scalar maximum value of each x, y, and z axes for each sensor data - linear acceleration, tilt, and rotational velocity.

Furthermore, each of the three-dimensional values refer to a scaled value, in one axis or direction, that is generated by the sensor components 205. Typically, sensor components provide outputs that are scaled values of voltage ranges corresponding to factored versions of the actual standard unit values. For example, linear acceleration is measure in meters/second2; Tilt is measured in degrees or alternatively, in terms of meters/second2 as a projection of the acceleration due to earth's gravity onto three-dimensional coordinate axes that are fixed in the frame of reference of the wearable computer. Rotational velocity is measured in radians/second. Each of the sensor components 205, however, may provide scaled values of these actual standard units representing factored versions of the actual value. In one example, the range output for scaled values corresponding to linear acceleration, tilt, and rotational velocity are in the range of 0 to 10 units (e.g., volts). The scaled values are easily adapted for the processing steps disclosed herein, but a person of ordinary skill in the art would recognize that the actual standard unit values can also be used to attain the same result. Specifically, while using the same processing steps, a person of ordinary skill may merely factor in any standard proportionality values to convert the scaled values to actual standard units and then representing the actual standard units in an absolute scale.

Block 305 of Fig. 3 illustrates a receiving function, performed at periodic time points 405 (e.g., t1 - t50) by one or more sensor components 205. The receiving function receives a set of three-dimensional values 410 characterizing linear acceleration, tilt, and rotational velocity (collectively referred to as y-axis components 415 of Fig. 4) of the wearable computer in real-time at the periodic time points 405. Accordingly, each set of three-dimensional values 410 includes x, y, and z components of a three-dimensional feature. For example, linear acceleration in three directions may have three different values; tilt may similarly have three different values; and rotational velocity typically has three different component values. There are, therefore, nine different values in each set of three-dimensional values that are received at a time point. The receiving function configures the processor 215 to receive directly from the sensor components 205, or to direct the sensor components to send the sets of three-dimensional values to the memory component 210. Further, the periodic time points, when taken together, constitute a measurement time interval (e.g., t1 - t50).

Block 310 illustrates a calculating function by processor 215. Specifically, the calculating function configures the processor 215 to calculate a meta acceleration value for each of the periodic time points 405 during the measurement time interval. Each meta acceleration value is based on the corresponding set of three-dimensional values received from the one or more sensor components 205.

Block 315 illustrates that the processor 215 is configured to perform a determination function to determine two distinct quiescent time intervals. The two distinct quiescent time intervals correspond to two distinct subsets of contiguous periodic time points (e.g., t3 - t5 and t20 - t23) during the measurement time interval t1 - t50 at which the meta acceleration value for each time point is less than a predefined threshold value. For example, in the illustration of Fig. 4, when the processor 215 determines that the meta-acceleration values at time points t3 - t5 and t20 - t23 are below 25% of the maximum meta-acceleration value of all meta acceleration values from the time points t1 - t50, then the periods t3 - t5 and t20 - t23 are determined to be two distinct quiescent time intervals.

Block 320 illustrates that the processor 215 is configured to determine a gesture time interval (event) between the two distinct quiescent time intervals (e.g., t3 - t5 and t20 - t23). In one aspect of this disclosure, the gesture time interval is defined by the periodic time points that occur between the two subsets of contiguous periodic time points corresponding to the two distinct quiescent time intervals. Accordingly, in Fig. 4, an exemplary gesture time interval includes all the time points t6 through t19 that represent contiguous periodic time points between the distinct quiescent time intervals, t3 - t5 and t20 - t23.

Block 325 illustrates that the processor 215 is configured to calculate sets of statistical features corresponding to the gesture time interval (e.g., t6 through t19). The sets of statistical features are based on the sets of three-dimensional values 415 at each of the periodic time points that constitute the gesture time interval (e.g., t6 through t19).

Block 325 illustrates that the processor 215 is configured to classify each of the sets of statistical features in at least two dimensions using at least one discriminant function. This process enables identification of at least two corresponding classifications to partially or fully segregate the sets of statistical features. Figs. 6A-B illustrate the classification process 600A-B, with classification boundaries 610 and 630 for the statistical features 605, 615, 620, and 625. While the boundaries are illustrated as solid lines, a person of ordinary skill would understand the boundaries to be the virtual equivalent of mathematical equations that are resolved or evaluated using the values of each statistical feature within the mathematical equation. For example, the classification process 600A is typically representative of support vector machine (SVM) classification, where boundary 610 is a hyperplane defining a clear gap between the types of statistical features. Each area 605 or 615 corresponds to classifications of statistical features relating to at least a predefined gesture. Accordingly, as used herein, boundaries or classifications refer to virtual separations (either open or closed) that may be achieved for the statistical features. Furthermore, at least one classification of the two classifications corresponds to at least one predefined impact gesture. The classification of the sets of statistical features causes the processor 215 to initiate a predefined response on a user interface 230 of a wearable device 105/200 or connected device 240, which is connected to the processor 215. The predefined response corresponds to the predefined impact gesture identified by classification process herein.

The connected device 240 may be a similar processor-based device as wearable computer 200, but may be mobile or fixed, and/or an active or a passive device, e.g., television, monitor, personal computer, smart appliance, mobile or any other device connected through the internet of things (IoT). The wearable computer includes a transceiver component 235, which is used to communicate with a similar transceiver component in the connected device 240. As a result, the impact gestures on the wearable computer 200 are reduced to events in the user-interface 230 of the wearable computer 200 and/or may be transmitted via transceiver/transmitter component 235 to the connected device 240. In an alternate embodiment, the transceiver/transmitter component 235 and the connected device 240 are configured to communicate using WiFi, Bluetooth, InfraRed, cellular wireless (e.g., 3G, 4G, etc.) or wired Ethernet. User-interface events, as a result of the impact gestures, may be a selection of a feature, a vibration response, a request for a menu of a data item, etc.

### EXAMPLE

In an exemplary application, a wearable smartwatch is a system with a processor to control a user-interface of a wearable computer or a device connected to the wearable computer, as illustrated in Fig. 1. One or more sensors in the smartwatch may include an accelerometer and an orientation sensor for receiving sets of three-dimensional values comprising acceleration, tilt, and rotational velocity. In an example, each set of three-dimensional values corresponds to one of a plurality of time points in real-time. In a further example, the sets of three-dimensional values includes acceleration values in three dimensions, tilt values in three dimensions, and rotational velocity values in three dimensions.

A buffer or memory in the smartwatch is operably connected to the processor for storing each of the sets of three-dimensional values. The processor is configured to calculate a meta acceleration value for each of the sets of three-dimensional values. The processor may call software code to perform its calculation or may include embedded machine code for faster processing. The processor further determines at least two time points of the plurality of time points at which the corresponding calculated meta acceleration values are less than a predefined percentage of the maximum meta acceleration value from the sets of three-dimensional values.

In an implementation of the present disclosure, the processor determines that calculated meta acceleration values are less than a predefined percentage of the maximum meta acceleration value by performing the determination at time points when the sensor component is active for every 150 milliseconds.

In another implementation, the meta acceleration values are calculated as: (a) the mean of the absolute maximum values among acceleration values in three dimensions for each of the sets of three-dimensional values; (b) the mean of the absolute maximum values among tilt values in three dimensions for each of the sets of three-dimensional values; and (c) the mean of the absolute maximum values among rotational velocity values in three dimensions for each of the sets of three-dimensional values.

In yet another implementation of the present invention, the predefined percentage of the maximum meta acceleration value is 25%, and the at least two time points at which the corresponding meta acceleration values are less than 25% represent the calm period in the sets of three-dimensional values. In an alternative implementation, the predefined percentage of the maximum meta acceleration value is between about 25% to about 35% or about 35% to about 49%.

In an example, each one of the time points corresponds to a time point that is optionally variable from a starting time and is between 20 to 30 milliseconds from the starting time; 30 to 40 milliseconds from the starting time; 40 to 50 milliseconds from the starting time; 50 milliseconds to 60 milliseconds from the starting time; 60 to 70 milliseconds from the starting time; 70 to 80 milliseconds from the starting time; 80 to 90 milliseconds from the starting time; or 90 to 100 milliseconds from the starting time. In another implementation, the starting time is a time when the one or more sensors begin to collect data.

The processor is also configured for determining when the sets of three-dimensional values between the at least two time points are received by the accelerometer and the orientation sensor with a predefined event length. In certain implementations, the predefined event length is 5 to 50 milliseconds, 50 to 100 milliseconds, 100 to 200 milliseconds, 200 to 300 milliseconds, or 400 to 500 milliseconds. The processor then calculates sets of statistical features, where each set of statistical features corresponds to each of those sets of three-dimensional values that are determined to be within the predefined event length. The processor then classifies each of the sets of statistical features in at least two dimensions using at least one discriminant function, thereby identifying at least two corresponding classifications to partially or fully segregate the sets of statistical features.

The processor, by way of classification of the at least one of the two classifications determines that the classifications correspond to a predefined impact gesture. The classification of the sets of statistical features causes the processor to initiate a predefined response on the user interface of the wearable computer or the device connected to the wearable computer. Consequently, the predefined response corresponding to the predefined impact gesture.

In one example, a further step or function by the processor prior or following the processes above may include filtering the extraneous events representing gestures other than the predefined impact gesture. The processor for filtering extraneous events other than the predefined impact gesture may perform the filtering by ignoring those events that have event lengths of between 300 to 400 milliseconds, in accordance with one aspect of the invention.

In another aspect of the invention, the processor for calculating the set of statistical features is configured to perform a normalizing function for each of the three-dimensional values in the sets of three-dimensional values that are within a predefined length of time points. Following the normalizing, the processor calculates a local maxima and a local minima for the three-dimensional values that are within the predefined event length. The calculated maxima and minima form the set of statistical features.

In another aspect of the invention, the processor for calculating the set of statistical features is configured to perform a normalizing function for each of the three-dimensional values in the sets of three-dimensional values that are within 20 time points, 25 time points, 30 time points, or 35 time points, each, in front and behind each time point sought to be normalized. Following the normalizing, the processor calculates a local maxima and a local minima for the three-dimensional values that are within the predefined event length. As in the example above, the calculated maxima and minima form the set of statistical features.

Another example of the invention utilizes a predefined normalization threshold. Here, the processor for calculating the set of statistical features is configured to perform a normalizing function for each of the three-dimensional values in the sets of three-dimensional values that are within a predefined length of time points. The normalized three-dimensional values are then capped at a predefined normalization threshold from 0.2 to 0.5. The processor calculates a local maxima and a local minima for the three-dimensional values that are within the predefined event length and optionally within the predefined normalization threshold and the set of statistical features are accordingly defined.

In yet another example for calculating the set of statistical features, normalizing is performed for each of the three-dimensional values in the sets of three-dimensional values that are within a predefined length of time points. In this example, an additional division function is performed for dividing each of the three-dimensional values with the average of neighboring values of the same type and dimension, and that are a predefined number of time points neighboring either sides of an event corresponding to the predefined impact gesture. Thereafter a calculating function is applied for a local maxima and a local minima for the three-dimensional values that are within the predefined event length.

In an alternative example, the dividing function of prior example may instead perform division for each of the three-dimensional values with the average of neighboring values of the same type and dimension, and that are 20, 25, 30, or 35 time points neighboring either sides of the event corresponding to the predefined impact gesture. Following the division, the calculation is performed as described above for the set of statistical features.

The set of statistical features may include one or more different types of features. For example, the set of statistical features may include: (1) a peak value for a curve from normalized acceleration values in one of three dimensions from the sets of three-dimensional values in the predefined event length; (2) values that are within the predefined event length; (3) a peak value for a first part of a curve of a normalized acceleration values in one of three dimensions from the sets of three-dimensional values in the predefined event length; (4) a peak value for a second part of a second curve of normalized acceleration values in one of three dimensions from the sets of three-dimensional values in the predefined event length; (5) a quotient or remainder obtained from a division of: (a) a mean value of the absolute differences for acceleration values in one of three dimensions from the sets of three-dimensional values in the predefined event length, and (b) a mean value of the absolute differences for acceleration values in one of three dimensions from the sets of three-dimensional values in the predefined event length and including a predefined number of time points neighboring either sides of an event corresponding to the predefined impact gesture; (6) a quotient or remainder obtained from a division of: (a) a mean value of the absolute values for acceleration values in one of three dimensions from the sets of three-dimensional values in the predefined event length, and (b) a mean value of the absolute values for acceleration values in one of three dimensions from the sets of three-dimensional values in the predefined event length and including a predefined number of time points neighboring either sides of an event corresponding to the predefined impact gesture; (7) a quotient or remainder obtained from a division of: (a) a mean value of the absolute values for rotational velocity values in one of three dimensions from the sets of three-dimensional values in the predefined event length, and (b) a mean value of the absolute values for rotational velocity values in one of three dimensions from the sets of three-dimensional values in the predefined event length and including a predefined number of time points neighboring either sides of an event corresponding to the predefined impact gesture; 8) a quotient or remainder obtained from a division of: (a) a maximum and a minimum values for acceleration values in the predefined event length, and (b) a maximum and a minimum values for acceleration values in one of three dimensions from the sets of three-dimensional values in the predefined event length and including a predefined number of time points neighboring either sides of an event corresponding to the predefined impact gesture; 9) a calculated value for number of local maxima and a local minima for rotational velocity values in one of three dimensions; 10) a quotient or remainder obtained from a division of: (a) the maximum value of meta acceleration for an event corresponding to the predefined impact gesture, and (b) the mean value of meta acceleration for the event and including the predefined number of time points neighboring either sides of the event; 10) a quotient or remainder obtained from a division of: (a) the mean value of meta acceleration for an event corresponding to the predefined impact gesture, and (b) the maximum value of meta acceleration for the event and including the predefined number of time points neighboring either sides of the event; and 11) a time duration value for an event corresponding to the predefined impact gesture.

The exemplary methods and acts described in the implementations presented previously are illustrative, and, in alternative implementations, certain acts can be performed in a different order, in parallel with one another, omitted entirely, and/or combined between different exemplary implementations, and/or certain additional acts can be performed without departing from the scope and spirit of the disclosure. Accordingly, such alternative implementations are included in the disclosures described herein.

The exemplary implementations can be used with computer hardware and software that perform the methods and processing functions described above. Exemplary computer hardware include smart phones, tablet computers, notebooks, notepad devices, personal computers, personal digital assistances, and any computing device with a processor and memory area. As will be appreciated by those having ordinary skill in that art, the systems, methods, and procedures described herein can be embodied in a programmable computer, computer executable software, or digital circuitry. The software can be stored on computer readable media. For example, "computer-readable code," "software application," "software module," "scripts," and "computer software code" are software codes used interchangeably for the purposes of simplicity in this disclosure. Further, "memory product," "memory," "computer-readable code product" and storage can include such media as floppy disk, RAM, ROM, hard disk, removable media, flash memory, memory stick, optical media, magneto-optical media, CD-ROM, etc.

Although specific implementations have been described above in detail, the description is merely for purposes of illustration. It should be appreciated, therefore, that many aspects described above are not intended as required or essential elements unless explicitly stated otherwise. Various modifications of, and equivalent acts corresponding to, the disclosed aspects of the exemplary implementations, in addition to those described above, can be made by person of ordinary skill in the art, having the benefit of the present disclosure.

## Claims

1. A method for a processor (215) to control a user-interface (230) of a wearable computer (200) or a device (240) connected to the wearable computer (200), the method for the processor (215) comprising:
receiving (305), from one or more sensors, sets of values (410) describing three-dimensional motion at periodic time points (405) that are taken together to form a measurement time interval;
calculating (310), by the processor (215), based on the corresponding set of values (410), a meta acceleration value for each of the periodic time points (405) received during the measurement time interval;
determining (315), by the processor (215), two distinct quiescent time intervals based on the calculated meta acceleration values;
determining (320), by the processor (215), a gesture time interval between the two distinct quiescent time intervals;
calculating (325), by the processor (215), sets of statistical values corresponding to each of the sets of values (410) within the gesture time interval;
classifying (330), by the processor (215), the sets of statistical values, thereby identifying a corresponding impact gesture of a wrist or fingers of a user wearing the wearable computer; and
initiating, by the processor (215), a predefined response on the user interface (230) of the wearable computer (200) or the device (240) connected to the wearable computer (200); wherein the predefined response corresponds to the identified impact gesture;
wherein the gesture time interval is a period between the two distinct quiescent time intervals in the measurement time interval;
wherein the two distinct quiescent time intervals have a set of contiguous time points with absolute maximum values less than a predefined threshold value; and
wherein the sets of statistical values are calculated for time points between the two distinct quiescent time intervals.

2. The method according to claim 1, wherein the sets of values (410) describe linear acceleration, tilt, and rotational velocity of the wearable computer (200) in real-time.

3. The method according to claim 1, wherein the distinct quiescent time intervals are 150 milliseconds apart from each other.

4. The method according to claim 1, wherein the classifying step is performed in at least two dimensions using at least one discriminant function.

5. The method according to claim 1, wherein the sets of statistical values are calculated by:
normalizing each of the sets of values (410) that are within:
a predetermined number of time points in front and behind each time point sought to be normalized; and
calculating local maxima and local minima for the sets of values (410) that are within the gesture time interval.

6. The method according to claim 1, wherein the sets of statistical values are calculated by:
normalizing each of the sets of values (410) that are within a predefined length of time points, wherein the normalized three-dimensional values are capped at a predefined normalization threshold; and
calculating local maxima and local minima for the three-dimensional values that are within the gesture time interval and optionally within a predefined normalization threshold.

7. The method according to claim 1, wherein the sets of statistical values are calculated by:
normalizing each of the sets of values (410) that are within the gesture time interval by:
dividing each of the sets of values (410) with the average of neighboring values of the same type and dimension, and that are a predefined number of time points neighboring either sides of an event corresponding to the impact gesture; and
calculating local maxima and local minima for the sets of values (410) that are within the gesture time interval.

8. The method according to claim 1, wherein the impact gesture comprises any one of finger snaps, tapping, and finger flicks.

9. A system comprising:
a processor (215) to control a user-interface of a wearable computer (200) or a device (240) connected to the wearable computer (200); and
one or more sensors for receiving sets of values (410) describing three-dimensional motion at periodic time points (405) that are taken together to form a measurement time interval;
wherein the processor (215) is configured to:
calculate (310), based on the corresponding set of values (410), a meta acceleration value for each of the periodic time points (405) received during the measurement time interval;
determine (315) two distinct quiescent time intervals based on the calculated meta acceleration values;
determine (320) a gesture time interval between the two distinct quiescent time intervals;
calculate sets of statistical values corresponding to each of the sets of values (410) within the gesture time interval;
classify the sets of statistical values thereby identifying a corresponding impact gesture of a wrist or fingers of a user wearing the wearable computer; and
initiate a predefined response on the user interface (230) of the wearable computer (200) or the device (240) connected to the wearable computer (200);
wherein the predefined response corresponds to the identified impact gesture;
wherein the processor (215) is further configured to define the gesture time interval as a period between the two distinct quiescent time intervals in the measurement time interval;
wherein the two distinct quiescent time intervals have a set of contiguous time points with absolute maximum values less than a predefined threshold value; and
wherein the sets of statistical values are calculated for time points between the two distinct quiescent time intervals.

10. The system according to claim 9, wherein the sets of values (410) describe linear acceleration, tilt, and rotational velocity of the wearable computer (200) in real-time.

## Patentansprüche

1. Verfahren für einen Prozessor (215) zum Steuern einer Benutzerschnittstelle (230) eines am Körper tragbaren Computers (200) oder einer Vorrichtung (240), die mit dem am Körper tragbaren Computer (200) verbunden ist, das Verfahren für den Prozessor (215) umfassend:
Empfangen (305), von einem oder mehreren Sensoren, von Sätzen von Werten (410), die eine dreidimensionale Bewegung beschreiben, zu periodischen Zeitpunkten (405), die zusammengefasst werden, um ein Messzeitintervall zu bilden;
Berechnen (310), durch den Prozessor (215), basierend auf dem entsprechenden Satz von Werten (410), eines Metabeschleunigungswerts für jeden der periodischen Zeitpunkte (405), der während des Messzeitintervalls empfangen wird;
Bestimmen (315), durch den Prozessor (215), von zwei verschiedenen Ruhezeitintervallen basierend auf den berechneten Metabeschleunigungswerten;
Bestimmen (320), durch den Prozessor (215), eines Gestenzeitintervalls zwischen den zwei verschiedenen Ruhezeitintervallen;
Berechnen (325), durch den Prozessor (215), von Sätzen von statistischen Werten entsprechend jedem der Sätze von Werten (410) in dem Gestenzeitintervall;
Klassifizieren (330), durch den Prozessor (215), der Sätze von statistischen Werten, wodurch eine entsprechende Berührungsgeste eines Handgelenks oder Fingers eines Benutzers, der den am Körper tragbaren Computer trägt, identifiziert wird; und
Initiieren, durch den Prozessor (215), einer vordefinierten Reaktion auf der Benutzerschnittstelle (230) des am Körper tragbaren Computers (200) oder der Vorrichtung (240), die mit dem am Körper tragbaren Computer (200) verbunden ist;
wobei die vordefinierte Reaktion der identifizierten Berührungsgeste entspricht; wobei das Gestenzeitintervall ein Zeitraum zwischen den zwei verschiedenen Ruhezeitintervallen in dem Messzeitintervall ist;
wobei die zwei verschiedenen Ruhezeitintervalle einen Satz von benachbarten Zeitpunkten aufweisen, deren absolute Höchstwerte kleiner als ein vordefinierter Schwellwert sind; und
wobei die Sätze von statistischen Werten für Zeitpunkte zwischen den zwei verschiedenen Ruhezeitintervallen berechnet werden.

2. Verfahren nach Anspruch 1, wobei die Sätze von Werten (410) eine lineare Beschleunigung, eine Neigung und eine Drehgeschwindigkeit des am Körper tragbaren Computers (200) in Echtzeit beschreiben.

3. Verfahren nach Anspruch 1, wobei die verschiedenen Ruhezeitintervalle 150 Millisekunden voneinander beabstandet sind.

4. Verfahren nach Anspruch 1, wobei der Klassifizierungsschritt in mindestens zwei Dimensionen unter Verwendung von mindestens einer Diskriminanzfunktion durchgeführt wird.

5. Verfahren nach Anspruch 1, wobei die Sätze von statistischen Werten berechnet werden durch:
Normalisieren von jedem der Sätze von Werten (410) innerhalb von:
einer vordefinierten Anzahl von Zeitpunkten vor und nach jedem Zeitpunkt, der normalisiert werden soll; und
Berechnen von lokalen Maxima und lokalen Minima für die Sätze von Werten (410), die in dem Gestenzeitintervall liegen.

6. Verfahren nach Anspruch 1, wobei die Sätze von statistischen Werten berechnet werden durch:
Normalisieren von jedem der Sätze von Werten (410), die innerhalb einer vordefinierten Länge von Zeitpunkten liegen, wobei die normalisierten dreidimensionalen Werte an einem vordefinierten Normalisierungsschwellwert begrenzt sind; und
Berechnen von lokalen Maxima und lokalen Minima für die dreidimensionalen Werte, die in dem Gestenzeitintervall und wahlweise innerhalb eines vordefinierten Normalisierungsschwellwerts liegen.

7. Verfahren nach Anspruch 1, wobei die Sätze von statistischen Werten berechnet werden durch:
Normalisieren von jedem der Sätze von Werten (410), die in dem Gestenzeitintervall liegen, durch:
Teilen von jedem der Sätze von Werten (410) mit dem Durchschnitt von benachbarten Werten des gleichen Typs und der gleichen Dimension, und wobei diese eine vordefinierte Anzahl von Zeitpunkten sind, die an beide Seiten eines Ereignisses angrenzen, das der Berührungsgeste entspricht; und
Berechnen von lokalen Maxima und lokalen Minima für die Sätze von Werten (410), die in dem Gestenzeitintervall liegen.

8. Verfahren nach Anspruch 1, wobei die Berührungsgeste ein beliebiges von Fingerschnippen, Tippen und Fingerstreichen umfasst.

9. System, umfassend:
einen Prozessor (215) zum Steuern einer Benutzerschnittstelle eines am Körper tragbaren Computers (200) oder einer Vorrichtung (240), die mit dem am Körper tragbaren Computer (200) verbunden ist; und
einen oder mehrere Sensoren zum Empfangen von Werten (410), die eine dreidimensionale Bewegung beschreiben, zu periodischen Zeitpunkten (405), die zusammengefasst werden, um ein Messzeitintervall zu bilden;
wobei der Prozessor (215) ausgelegt ist zum:
Berechnen (310), basierend auf dem entsprechenden Satz von Werten (410), eines Metabeschleunigungswerts für jeden der periodischen Zeitpunkte (405), der während des Messzeitintervalls empfangen wird;
Bestimmen (315) von zwei verschiedenen Ruhezeitintervallen basierend auf den berechneten Metabeschleunigungswerten;
Bestimmen (320) eines Gestenzeitintervalls zwischen den zwei verschiedenen Ruhezeitintervallen;
Berechnen von Sätzen von statistischen Werten entsprechend jedem der Sätze von Werten (410) in dem Gestenzeitintervall;
Klassifizieren der Sätze von statistischen Werten, wodurch eine entsprechende Berührungsgeste eines Handgelenks oder Fingers eines Benutzers, der den am Körper tragbaren Computer trägt, identifiziert wird; und
Initiieren einer vordefinierten Reaktion auf der Benutzerschnittstelle (230) des am Körper tragbaren Computers (200) oder der Vorrichtung (240), die mit dem am Körper tragbaren Computer (200) verbunden ist;
wobei die vordefinierte Reaktion der identifizierten Berührungsgeste entspricht;
wobei der Prozessor (215) ferner dazu ausgelegt ist, das Gestenzeitintervall als einen Zeitraum zwischen den zwei verschiedenen Ruhezeitintervallen in dem Messzeitintervall zu definieren;
wobei die zwei verschiedenen Ruhezeitintervalle einen Satz von benachbarten Zeitpunkten aufweisen, deren absolute Höchstwerte kleiner als ein vordefinierter Schwellwert sind; und
wobei die Sätze von statistischen Werten für Zeitpunkte zwischen den zwei verschiedenen Ruhezeitintervallen berechnet werden.

10. System nach Anspruch 9, wobei die Sätze von Werten (410) eine lineare Beschleunigung, eine Neigung und eine Drehgeschwindigkeit des am Körper tragbaren Computers (200) in Echtzeit beschreiben.

## Revendications

1. Procédé de processeur (215) permettant de commander une interface d'utilisateur (230) d'un système informatique à porter (200) ou d'un équipement (240) connecté au système informatique à porter (200), le procédé de processeur (215) comprenant :
la réception (305), depuis un ou plusieurs capteurs, d'ensembles de valeurs (410) décrivant un mouvement en trois dimensions à des points temporels périodiques (405) qui sont pris conjointement pour former un intervalle de temps de mesure ;
le calcul (310), par le processeur (215), sur la base de l'ensemble correspondant de valeurs (410), d'une valeur de méta accélération pour chacun des points temporels périodiques (405) reçus pendant l'intervalle de temps de mesure ;
la détermination (315), par le processeur (215), de deux intervalles de temps de repos distincts sur la base des valeurs de méta accélération calculées ;
la détermination (320), par le processeur (215), d'un intervalle de temps de geste entre les deux intervalles de temps de repos distincts ;
le calcul (325), par le processeur (215), d'ensembles de valeurs statistiques correspondant à chacun des ensembles de valeurs (410) dans l'intervalle de temps de geste ;
la classification (330), par le processeur (215), des ensembles de valeurs statistiques, identifiant de la sorte un geste d'impact correspondant d'un poignet ou de doigts d'un utilisateur portant le système informatique à porter ; et
l'initiation, par le processeur (215), d'une réponse prédéfinie sur l'interface d'utilisateur (230) du système informatique à porter (200) ou de l'équipement (240) connecté au système informatique à porter (200) ; dans lequel la réponse prédéfinie correspond au geste d'impact identifié ; dans lequel l'intervalle de temps de geste est une période entre les deux intervalles de temps de repos distincts dans l'intervalle de temps de mesure ; dans lequel les deux intervalles de temps de repos distincts ont un ensemble de points temporels contigus avec des valeurs maximum absolues inférieures à une valeur de seuil prédéfinie ; et
dans lequel les ensembles de valeurs statistiques sont calculées pour des points temporels entre les deux intervalles de temps de repos distincts.

2. Procédé selon la revendication 1, dans lequel les ensembles de valeurs (410) décrivent une accélération linéaire, une inclinaison, et une vitesse de rotation du système informatique à porter (200) en temps réel.

3. Procédé selon la revendication 1, dans lequel les intervalles de temps de repos distincts sont espacés les uns des autres de 150 millisecondes.

4. Procédé selon la revendication 1, dans lequel l'étape de classification est exécutée dans au moins deux dimensions en utilisant au moins une fonction discriminante.

5. Procédé selon la revendication 1, dans lequel les ensembles de valeurs statistiques sont calculés par :
la normalisation de chacun des ensembles de valeurs (410) qui se situent à l'intérieur de :
un nombre prédéterminé de points temporels devant et derrière chaque point temporel que l'on cherche à normaliser ; et
le calcul de maxima locaux et minima locaux pour les ensembles de valeurs (410) qui se situent dans l'intervalle de temps de geste.

6. Procédé selon la revendication 1, dans lequel les ensembles de valeurs statistiques sont calculés par :
la normalisation de chacun des ensembles de valeurs (410) qui se situent à l'intérieur d'une longueur prédéfinie de points temporels, dans lequel les valeurs en trois dimensions normalisées sont plafonnées à un seuil de normalisation prédéfini ; et
le calcul de maxima locaux et minima locaux pour les valeurs en trois dimensions qui se situent dans l'intervalle de temps de geste et en option dans un seuil de normalisation prédéfini.

7. Procédé selon la revendication 1, dans lequel les ensembles de valeurs statistiques sont calculés par :
la normalisation de chacun des ensembles de valeurs (410) qui se situent à l'intérieur de l'intervalle de temps de geste par :
la division de chacun des ensembles de valeurs (410) par la moyenne de valeurs voisines des mêmes type et dimension, et qui sont un nombre prédéfini de points temporels voisins de chaque côté d'un événement correspondant au geste d'impact ; et
le calcul de maxima locaux et minima locaux pour les ensembles de valeurs (410) qui se situent dans l'intervalle de temps de geste.

8. Procédé selon la revendication 1, dans lequel le geste d'impact comprend l'un quelconque parmi des claquements de doigts, un tapement et des pichenettes.

9. Système comprenant :
un processeur (215) permettant de commander une interface d'utilisateur d'un système informatique à porter (200) ou d'un équipement (240) connecté au système informatique à porter (200) ; et
un ou plusieurs capteurs permettant de recevoir des ensembles de valeurs (410) décrivant un mouvement en trois dimensions à des points temporels périodiques (405) qui sont pris conjointement pour former un intervalle de temps de mesure ;
dans lequel le processeur (215) est configuré pour: calculer (310), sur la base de l'ensemble correspondant de valeurs (410), d'une valeur de méta accélération pour chacun des points temporels périodiques (405) reçus pendant l'intervalle de temps de mesure ;
déterminer (315) deux intervalles de temps de repos distincts sur la base des valeurs de méta accélération calculées ;
déterminer (320) un intervalle de temps de geste entre les deux intervalles de temps de repos distincts ;
calculer des ensembles de valeurs statistiques correspondant à chacun des ensembles de valeurs (410) dans l'intervalle de temps de geste ;
classifier les ensembles de valeurs statistiques, identifiant de la sorte un geste d'impact correspondant d'un poignet ou de doigts d'un utilisateur portant le système informatique à porter ; et
initier une réponse prédéfinie sur l'interface d'utilisateur (230) du système informatique à porter (200) ou de l'équipement (240) connecté au système informatique à porter (200) ;
dans lequel la réponse prédéfinie correspond au geste d'impact identifié ; dans lequel le processeur (215) est en outre configuré pour définir l'intervalle de temps de geste comme une période entre les deux intervalles de temps de repos distincts dans l'intervalle de temps de mesure ; dans lequel les deux intervalles de temps de repos distincts ont un ensemble de points temporels contigus avec des valeurs maximum absolues inférieures à une valeur de seuil prédéfinie ; et
dans lequel les ensembles de valeurs statistiques sont calculées pour des points temporels entre les deux intervalles de temps de repos distincts.

10. Système selon la revendication 9, dans lequel les ensembles de valeurs (410) décrivent une accélération linéaire, une inclinaison, et une vitesse de rotation du système informatique à porter (200) en temps réel.
